# EUROPEAN PATENT SPECIFICATION

(11) **EP 1 550 834 B1**
(45) Date of publication and mention of the grant of the patent: **18.05.2016**
(21) Application number: 04028835.9
(22) Date of filing: 06.12.2004
(51) Int. Cl.: F24D 3/14, F28F 21/08, F28D 1/047, F28F 1/22, B23K 101/14, B23K 103/12, B23K 103/22, B23K 103/10, B23K 26/32, B23K 103/08, B23K 26/323, B23K 26/242

(54) **Radiant panel**
Strahlplatte
Panneau Rayonnant

(30) Priority: 02.01.2004 GR 2004100001
(43) Date of publication of application: 06.07.2005
(73) Proprietor: PRIME LASER TECHNOLOGY SA, 190 01 Keratea (GR)
(72) Inventor: Travassaros, Constantine, Glyfada GR-165-61 (GR)
(74) Representative: Nordic Patent Service A/S

(56) References cited:
- EP-A- 0 222 176
- EP-A- 0 423 500
- EP-A- 1 362 662
- WO-A-98/35191
- DE-A1- 19 635 843
- DE-A1- 19 721 657
- GB-A- 2 397 642
- US-A- 2 386 889
- US-A- 4 224 499
- US-B1- 6 300 591

## Description

### SPACE HEATING RADIATOR

The invention relates to space heating radiators, in particular to space heating radiators that comprise tubes and metal plates and heat with infrared radiation emission and with convection.

### BACKGROUND ART

Conventional radiators are usually formed by a pair of corrugated steel plates welded to one another. The steel plates are shaped so as to form water channels. In order to increase their capacity to transfer by convection, they often have steel fins welded on the surface panels where the water is flowing through.

In order to form the water channels, the use of two steel plates is required, with adequate thickness, the weight and the cost aura therefore significant. The distances between the water channels and their cross-section are chosen such that the temperature of the radiator is uniform, thus ensuring the highest possible heat transmission for a given size of radiator. Because the thermal conductivity of steel is relatively low, the distance between the water channels should be small. The shape of the radiators is limited by the material and the manufacturing method.

Another type of radiator is formed of steel or copper tubes. The wall thickness of pipes is such that they can be shaped and welded. This leads to a relatively high weight in comparison to the obtained radiating surface. The use of aluminum improves the thermal conductivity but this material is usually not used to form water channels. The difficulty to form water channels limits the wide spread use of aluminum. If aluminum plating is used, the copper or steel water tubes are usually mechanically bonded to the plate. To maintain a good heat transfer it is necessary to have large tube surface in contact with the aluminum plate. The tube surface bonded in the aluminum does however not contribute to the heating.

Similar problems, even if the heat flow is from the plate to the water channel, are also faced in the solar energy absorber of solar thermal collectors. This technology is however not suitable for welding of aluminum plates to copper tubes.

DE 19721657 discloses a heat exchanger that comprises a panel and tubing. In the detailed description of DE 19721657 ultrasonic welding is used to attach a copper plate absorber to copper tubing. Examples of other materials for the panel and tubing, such as aluminum and stainless steel are also disclosed. An array of various techniques for connecting the panel to the tubing such as e.g. folding, gluing, clips, is disclosed. The tubing comprises two parallel large diameter header pipes and a plurality of parallel small-diameter straight connecting pipes that extend between the header pipes. The straight small-diameter connecting pipes are welded to one side the panel and are therefore not exposed. The large diameter header pipes extend along the edges of the panel and are completely exposed. The exposed large diameter header pipes render this known heat exchanger relatively bulky and non-aesthetic. The development of pulse laser welding allows the welding of copper tubes onto a full size plate of aluminum. The welding is achieved with a laser beam that is focused in the acute angle formed between the copper pipes and the side of the absorber plate.

DE 19721657 discloses the preamble of claim 1.

### DISCLOSURE OF THE INVENTION

On this background, it is an object of the present invention to provide a space heating radiator that overcomes the above mentioned drawbacks. This object is achieved in accordance with claim 1.

Thus, an effective, easy to manufacture and esthetically pleasing radiator is provided.

Two or more radiators according of this type can be connected in series to form a high power radiator.

Further objects, features, advantages and properties of the space heating radiator according to the invention will become apparent from the detailed description.

### BRIEF DESCRIPTION OF THE DRAWINGS

In the following detailed portion of the present description, the invention will be explained in more detail with reference to the exemplary embodiments shown in the drawings, in which
Fig. 1 illustrates a side view of a radiator according to a first embodiment,
Fig. 2 illustrates the welding step for producing a radiator,
Figs. 3a to 3d are different views of a radiator according to a second embodiment,
Fig. 4 illustrates the welding step of a radiator according to a third embodiment,
Figs. 5a and 5b illustrate fins that may be added to the radiator,
Figs. 6a and 6b are different views of a radiator according to a fourth embodiment,
Fig. 7 illustrates a side view of a radiator according to a fifth embodiment.

### DETAILED DESCRIPTION

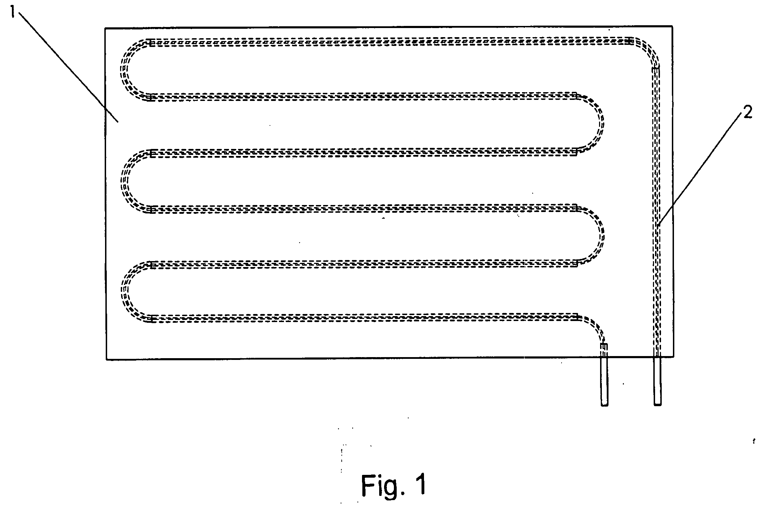

Fig. 1 illustrates a first embodiment of a radiator that comprises one tube 2 of suitable diameter to form a meander or serpentine conduit. The tube serves as a conduit for transporting the heating medium, which is usually hot water from a central heating system. A semi-hard copper tube with e.g. 10mm diameter and wall thickness 0,4 mm, is de-coiled through a forming machine to obtain a meander shape. The distance between the parallel pipes is for example 100 mm.

The copper tube ends are brazed with bronze fittings with e.g. 1/2" male thread, to be connected with a heating valve (not shown). The tube 2 can be made of different types of copper alloys such as Copper tube material Cu-DHP (CWO24A).

An aluminum plate 1, e.g. 0,8 mm thick, painted white on the one side, with paint having high emissivity at infrared and covered by thin protective plastic foil, is cut in suitable dimensions. The sides of the plate 1 are formed so that there are no exposed sharp edges. The plate 1 can be wade of different aluminum alloys such as Aluminum Alloy: AlMg 1.

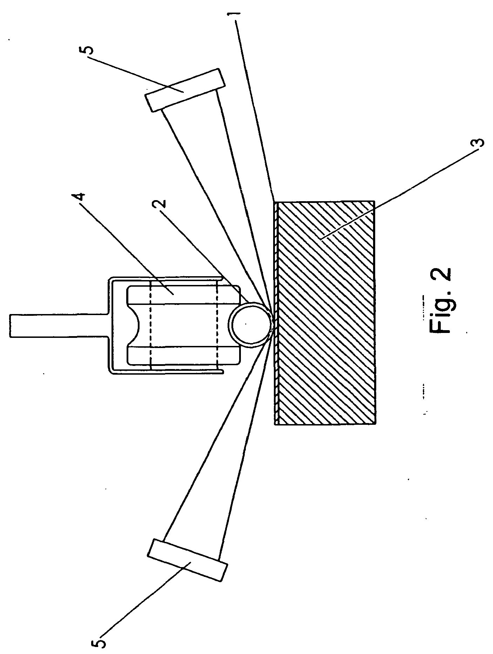

With reference to Fig. 2 the aluminum plate 1 is placed on horizontal flat table 3 with the painted surface facing the table. The water tube 2 is paced on the aluminum plate 1 and are temporarily fixed with mechanical clamps. Fig. 2 shows in section, the table 3 and the lower part of a suitable assembly 4 that presses from above on the pipe 2 to press the latter onto the aluminum plate 1. The pressure is local in the area of the welding, and the assembly 4 moves along the tube 2 as it is welded.

One or two pulse laser beams 5 are directed, transverse to the long axis of the pipe, in the acute recess that is formed between the pipe and the aluminum plate 1. The two reflective metals, the wavelength of beam, and the conical form of the recess, lead to the absorption of the energy of the beam resulting in the formation of a weld permanently connecting the tube to the plate. To increase the productivity, a second optical system directs simultaneously a laser beam on the opposite side of the copper tube. The welding speed can be more than 20 cm per second, depending on the capacity of the power source, the frequency of pulse and the distance between the welding spots.

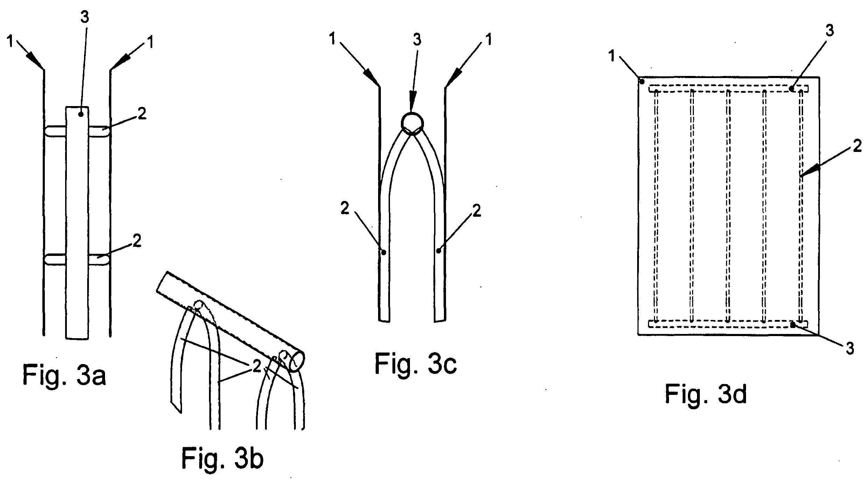

Figs. 3a,3b,3c and 3d illustrate a radiator that is made from aluminum panels 1 welded onto tubes forming a serpentine conduit or flow path. The vertical pipes 2 have a smaller diameter than the horizontal header 3 which distributes the water in the vertical tubes.

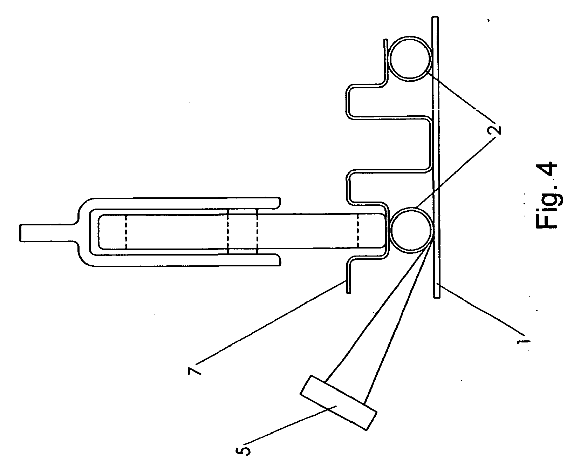

Fig. 4 illustrates a radiator with an aluminum plate 1 welded onto copper tubes 2. Additional shaped aluminum fins 7 formed by a corrugated sheet are welded onto the copper pipes. The aluminum fins are thinner than the plate 1 and have been welded on the copper pipes before the final configuration of the water channels, and increase the power of the radiator by increasing the surface heating the air.

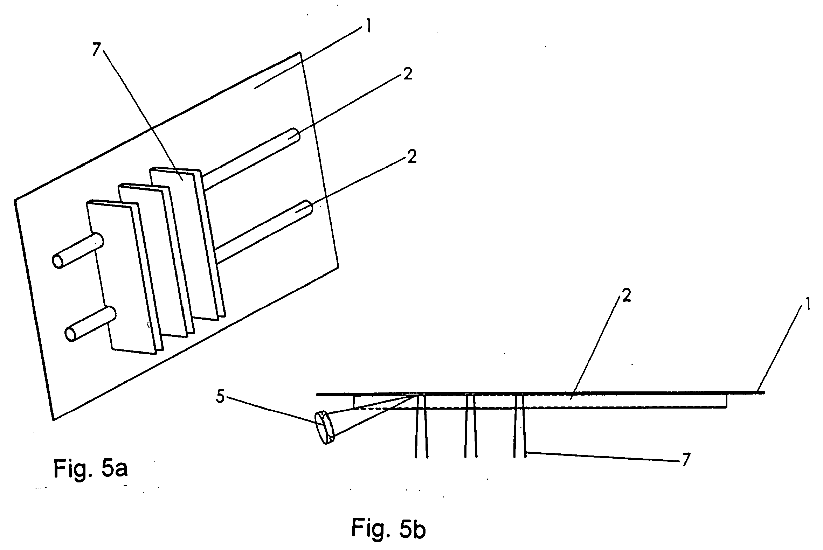

Figs. 5a and 5b illustrate a radiator made of an aluminum plate 1 welded onto copper tubes 2 and aluminum fins 3 shaped and welded onto the aluminum plate and extending transversely thereto. Fig 5b also illustrates how the pulse laser is applied to weld the fins 7 to the plate 1.

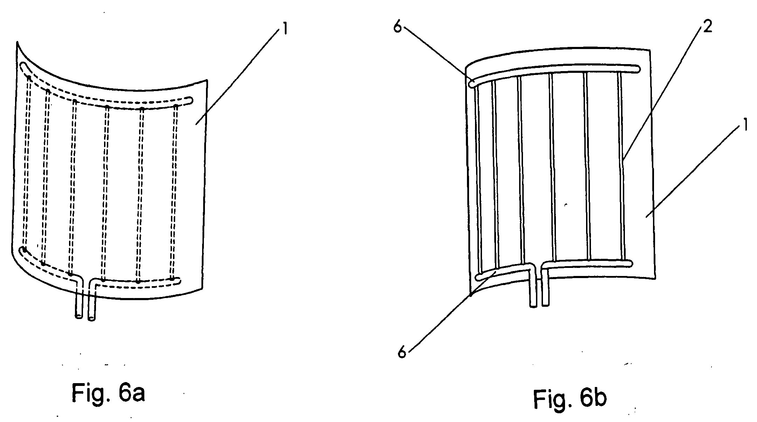

Figs. 6a and 6b illustrate a relatively high radiator, for example 2 meters, with a curved form that is made from an aluminum plate 1 welded onto vertical copper tubes 2. The assembly of the tube and plate is then formed into its curved shape. The horizontal distribution pipes 6 are welded last.

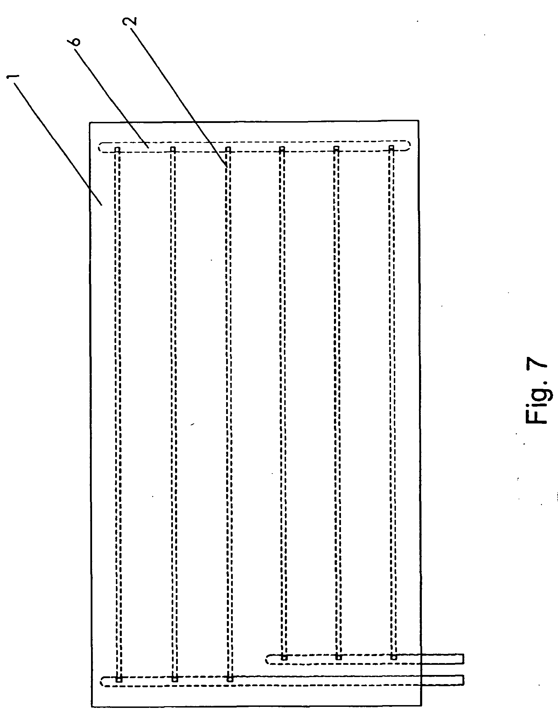

Fig. 7 illustrates radiator of long length with horizontally configured pipes 2, forming together with distribution pipes 6 a serpentine flow path with a hot water inlet and outlet on the same side.

Thus, while the preferred embodiments of the devices have been described in reference to the environment in which they were developed, they are merely illustrative of the principles of the invention. Other embodiments and configurations may be devised without departing from the scope of the appended claims.

## Claims

1. A space heating radiator comprising at least one copper or copper alloy tube (2) for conveying a heat transport medium and one or more aluminum or aluminum alloy panels (1) for heat transfer to the surrounding space via radiation and convection, whereby said at least one copper or copper alloy tube (2) has the form of a meandering conduit or has a serpentine form comprising an assembly of vertical tubes and with horizontal tubes welded between them, **characterized by** laser beam welds securing said meandering conduit or said assembly onto one of the sides of the one or more aluminum or aluminum alloy panels (1).

2. A radiator according to claim 1, further comprising aluminum fins secured to said tubes or to said panels by welds for increasing heat transfer by convection.

3. A radiator according to claim 2, wherein the welds securing the fins are laser welds.

4. An assembly of two or more radiators according to claim 1, connected in series to form a high power radiator.

## Patentansprüche

1. Raumheizradiator, der mindestens ein Kupfer- oder Kupferlegierungsrohr (2) zum Befördern eines Wärmetransportmediums und eine oder mehrere Aluminium-oder Aluminiumlegierungsplatten (1) zur Wärmeübertragung an den umgebenden Raum durch Strahlung und Konvektion umfasst, wobei mindestens ein Kupfer- oder Kupferlegierungsrohr (2) die Form eines sich schlängelnden Leitungsrohres hat oder eine schlangenartige Form hat, die eine Gruppe von vertikalen Rohren hat und mit horizontalen Rohren, die zwischen ihnen angeschweißt sind, **gekennzeichnet durch** Laserstrahlschweißungen, die das sich schlängelnde Leitungsrohr oder die Gruppe an einer der Seiten der einen oder mehreren Aluminium- oder Aluminiumlegierungsplatten (1) befestigen.

2. Radiator nach Anspruch 1, der ferner Aluminiumrippen umfasst, die an den Rohren oder an den Platten durch Schweißnähte zum Vergrößern der Wärmeübertragung durch Konvektion umfasst.

3. Radiator nach Anspruch 2, wobei die Schweißnähte, die die Rippen befestigen, Laserschweißnähte sind.

4. Gruppe von zwei oder mehr Radiatoren nach Anspruch 1, die in Reihe verbunden sind, um einen Hochleistungsradiator zu bilden.

## Revendications

1. Radiateur de chauffage de locaux comprenant au moins un tube en cuivre ou en alliage de cuivre (2) destiné à transporter un fluide caloporteur, et un ou plusieurs panneaux en aluminium ou en alliage d'aluminium (1) destinés à transférer la chaleur vers l'espace environnant par rayonnement et convection, ledit au moins un tube en cuivre ou en alliage de cuivre (2) présente la forme d'un conduit sinueux ou présente une forme en serpentin comprenant un ensemble de tubes verticaux et avec des tubes horizontaux soudés entre eux, **caractérisé par** des soudures au faisceau laser fixant ledit conduit sinueux ou ledit ensemble sur l'un des côtés des un ou plusieurs panneaux en aluminium ou en alliage d'aluminium (1).

2. Radiateur selon la revendication 1, comprenant en outre des ailettes en aluminium fixées auxdits tubes ou auxdits panneaux par des soudures pour augmenter le transfert de chaleur par convection.

3. Radiateur selon la revendication 2, dans lequel les soudures fixant les ailettes sont des soudures au laser.

4. Ensemble de deux radiateurs ou plus selon la revendication 1, reliés en série pour former un radiateur à puissance élevée.
